# EUROPÄISCHE PATENTANMELDUNG

(11) **EP 0 603 470 A1**
(43) Veröffentlichungstag der Anmeldung: **29.06.1994**
(21) Anmeldenummer: 93114629.4
(22) Anmeldetag: 11.09.1993
(51) Int. Cl.: A01D 41/14

(54) **Schneidwerk für Mähdrescher**

(30) Priorität: 22.12.1992 DE 4243542
(71) Anmelder: Klöckner-Humboldt-Deutz Aktiengesellschaft, D-51149 Köln (DE)
(72) Erfinder: von Allwörden, Wilhelm, Dipl.-Ing., D-89168 Oberstotzingen (DE)

(57) **Zusammenfassung**

Ausgehend von einer Erntemaschine mit einem an der Erntemaschine über eine Kupplungseinrichtung (5) anbaubaren Schneidwerk (1) wird die der Erfindung zugrunde liegende Aufgabe, unter Beibehaltung der schnellen Anbaubarkeit des Schneidwerkes (1) ein Pendelausgleich des Schneidwerkes (1) konstruktiv zu realisieren, dadurch gelöst, daß dem Schneidwerk (1) eine Vorrichtung zum Ausgleich von Unebenheiten des Bodens (Pendelvorrichtung) zugeordnet ist, wobei die Kupplungseinrichtung (5) und die Vorrichtung zum Ausgleich von Unebenheiten im wesentlichen in einer Ebene angeordnet sind.

## Beschreibung

Die Erfindung betrifft eine Erntemaschine, insbesondere Mähdrescher, gemäß den Merkmalen des Oberbegriffes des Patentanspruches 1.

Es ist Stand der Technik, daß Mähdrescher, insbesondere Großmähdrescher, eine Kupplungseinrichtung aufweisen, die es ermöglicht, das Schneidwerk schnell von der Erntemaschine zu trennen und auf einem Schneidwerk-Transportwagen zu lagern, der bei Straßenfahrt dem Mähdrescher angehängt ist.

Weiterhin ist es bekannt, daß Mähdrescher zum Ausgleich von Bodenunebenheiten mit einem Pendelausgleich am Schneidwerk augestattet sind. Die räumliche Trennung von Kupplungseinrichtung und Pendelausglelch benötigt viel Bauraum (insbesondere Länge).

Der Erfindung liegt die Aufgabe zugrunde, eine Erntemaschine, insbesondere einen Mähdrescher, nach der eingangs geschilderten Ausbildung derart auszugestalten, daß unter Beibehaltung der schnellen Anbaubarkeit des Schneidwerkes ein Pendelausgleich des Schneidwerks Konstruktiv einfach realisiert ist, wobei diese Kombination (Schneidwerk-Kupplungseinrichtung - Pendelausgleich) wenig Bauraum beansprucht.

Diese Aufgabe ist durch die kennzeichnenden Merkmale des Patentanspruches 1 gelöst.

In bekannter Weise ist dem Schneidwerk eine Vorrichtung zum Ausgleich von Unebenheiten des Bodens (Pendelausgleich) zugeordnet, wobei erfindungsgemäß eine Trennstelle der Kupplungseinrichtung und die Vorrichtung zum Ausgleich von Unebenheiten im wesentlichen in einer Ebene angeordnet sind. Dieser Pendelausgleich hat die Aufgabe, eine nahezu gleichbleibende Schnitthöhe des Erntegutes zu gewährleisten, wobei die Schnitthöhe unabhängig von Bodenunebenheiten des Erntefeldes ist. Somit werden Unebenheiten, die von den Antriebsrädern auf die gesamte Erntemaschine übertragen werden, mit der Folge, daß insbesondere die Endbereiche des Schneidwerkes starken Höhenschwankungen ausgesetzt sind, ausgeglichen. Ein weiterer Erfindungsgedanke im Zusammenhang mit dem Pendelausgleich sieht vor, daß die Kupplungseinrichtung, mit der das Schneidwerk an der Erntemaschine anbaubar ist, und die Pendelvorrichtung im wesentlichen in einer Ebene angeordnet sind. Diese Anordnung hat den Vorteil, daß das Schneidwerk schnell und problemlos an die Erntemaschine anbaubar ist unter Beibehaltung des Pendelausgleichs. Darüber hinaus ist dadurch, daß sämtliche Komponenten des Pendelausgleichs und der Kupplungseinrichtung in einer Ebene angeordnet sind, eine kompakte Bauweise gegeben, die konstruktiv einfach realisierbar ist und wenig Bauraum benötigt. Ein weiterer Vorteil besteht darin, daß schon vorhandene Elemente (insbesondere der Schneidwerkantrieb mittels Wellenantrieb, der über ein Kardangelenk zum Schneidwerk geführt ist) in der vorliegenden Ausführung übernommen werden können, so daß spezielle Ausgestaltungen (wie zum Beispiel die Verwendung von Doppelgelenken oder Verlängerungselementen) entfallen. Ebenso entfällt eine Verlängerung von Hydraulikschläuchen, Riemen, Ketten oder elektrischen Verbindungen.

In Weiterbildung der Erfindung sind die Kupplungseinrichtung und die Vorrichtung zum Ausgleich von Unebenheiten in einer im wesentlichen zur Längsachse der Erntemaschine senkrechten Ebene angeordnet. Diese Anordnung ist insbesondere im Hinblick auf eine kräfteoptimale Anbringung des Schneidwerkes an der Erntemaschine von Vorteil.

In weiteren Ausgestaltungen der Erfindung weist die Vorrichtung zum einen einen Drehpunkt auf, wobei das Schneidwerk um den Drehpunkt herum pendelnd gelagert ist gegenüber einem Einzugskanal der Erntemaschine, wobei zum anderen an dem Schneidwerk und an dem Einzugskanal Anschläge derart vorgesehen sind, daß eine Führung bzw. Begrenzung des Pendelausgleiches gegeben ist. Hierbei handelt es sich um vorteilhafte Ausgestaltungen des Pendelausgleichs, die beispielhaft in den Figuren erläutert ist. Mittels einer Ausgestaltung des Drehpunktes beispielsweise als arretierbarer Bolzen ist eine Fixierung des Schneidwerkes nach Ankuppeln mittels hydraulischer Bewegung des Einzugskanales möglich.

In einer weiteren Ausgestaltung der Erfindung ist die Position der Anschläge veränderbar. Hierbei ist es denkbar, die Position der Anschläge beispielsweise mittels einer Hydraulik (Hydraulikzylinder) in Abhängigkeit der Unebenheiten des Feldes (insbesondere bei einem Hangeinsatz der Erntemaschine) zu verändern. Eine Veränderung kann zu beiden Seiten des Schneidwerkes gleich oder voneinander verschieden sein. Darüber hinaus ist es denkbar, die Veränderung manuell vorzunehmen bzw. automatisch zu steuern.

In Weiterbildung der Erfindung sind in der Kupplungseinrichtung Mittel integriert, die für einen Schneidwerkantrieb, eine Hydraulik bzw. eine Elektrik erforderlich sind. Diese Mittel sind in vorteilhafter Weise derart ausgestaltet, daß bei einem Ankoppel- bzw. einem Abbauvorgang des Schneidwerkes eine Verbindung für die Komponenten wie Schneidwerkantrieb, Hydraulik bzw. elektrisch automatisch hergestellt wird, ohne daß eine Bedienperson der Erntemaschine eingreift.

Darüber hinaus ist es denkbar, daß der Drehpunkt, um den das Schneidwerk bewegbar ist, lediglich fiktiv ist. Zu diesem Zweck ist es erfindungsgemäß vorgesehen, daß die Anschläge am Schneidwerk im wesentlichen U-förmig und derart ausgebildet sind, daß diese nach Ankuppeln (Einhängen mittels hydraulischer Bewegung des Einzugskanales) des Schneidwerkes über den Anschlägen, die am Einzugskanal angeordnet sind, gleitend geführt sind. Aufgrund des Eigengewichtes des Schneidwerkes erfolgt eine wirksame Fixierung mit der Möglichkeit des Pendelausgleiches, so daß weitere Elemente zur Fixierung des Schneidwerkes bezüglich des Pendelausgleiches entfallen.

Weitere Ausgestaltungen der Erfindung sind im folgenden näher beschrieben und in den Figuren gezeigt. Es zeigen:
- Figur 1:: Eine Vorderansicht einer Erntemaschine,
- Figur 2:: einen Querschnitt durch ein Schneidwerk.

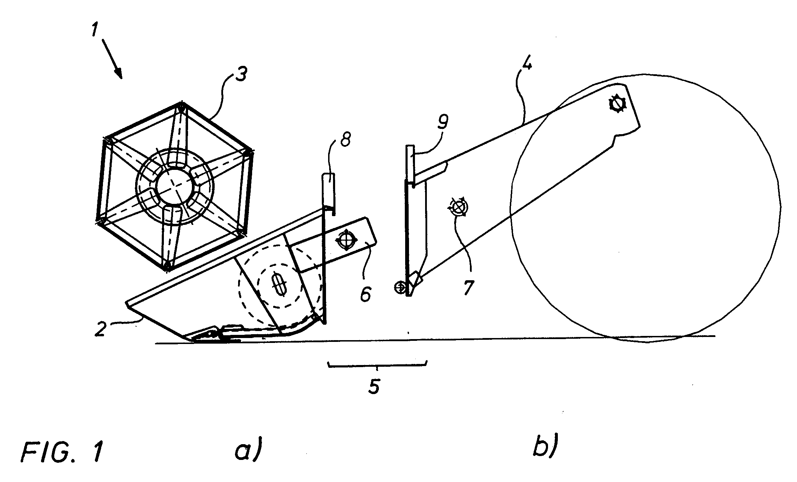

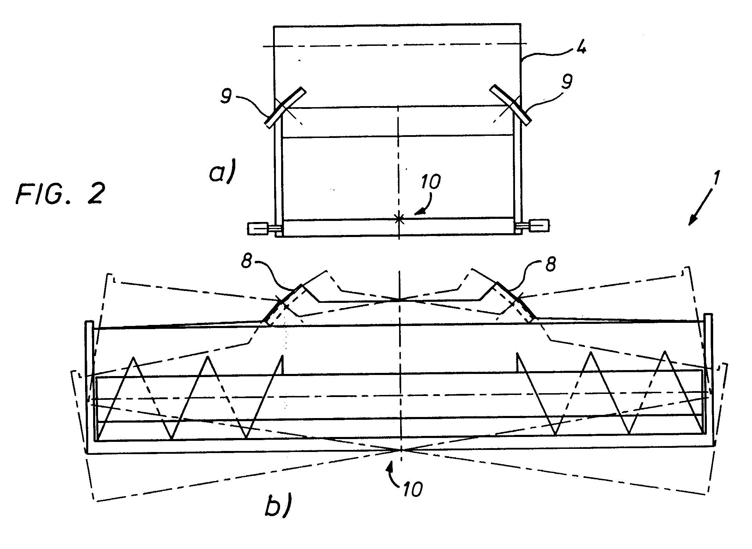

Figur 1 zeigt eine Vorderansicht einer Erntemaschine, bei der es sich beispielsweise um einen Mähdrescher handelt. Ein Schneidwerk 1, welches für die Getreideernte ausgebildet ist, weist in ansich bekannter Weise als wesentliche Elemente einen Schneidtisch 2 sowie eine Haspel 3 auf. Weitere Elemente wie beispielsweise Messer oder Schneidwerkantrieb sind der einfachheithalber nicht dargestellt. Ein schematisch dargestellter Einzugskanal 4, der an dem Mähdrescher angebracht ist, der an dem Mähdrescher angebracht ist, weist an seinem vorderen Ende Komponenten einer Kupplungseinrichtung 5 auf, wobei die den Komponenten der Kupplungseinrichtung 5 des Einzugkanales 4 zugeordneten Komponente an dem Schneidwerk 1 ebenfalls vorhanden sind. Eine Komponente der Kupplungseinrichtung 5 an dem Schneidwerk 1 sind Fangtaschen 6, die an dem Schneidtisch 2 angebracht sind. Die Fangtaschen 6 stehen im angebauten Zustand des Schneidwerks 1 im Eingriff mit Fangzapfen 7, welche am Einzugskanal 4 angeordnet sind. Weiterhin sind in dieser Figur Anschläge 8 und 9 an dem Schneidtisch 2 bzw. an dem Einzugskanal 4 vorhanden, die in der folgenden Figur 2 näher beschrieben sind. Die Aufnahme des Schneidwerkes 1 erfolgt dergestalt, daß der hydraulisch bewegbare Einzugskanal 4 mit den Anschlägen 9 unter die Anschläge 8 des Schneidwerkes 1 gefahren wird. Durch Hochfahren des Einzugskanales 4 erfolgt die Aufnahme des Schneidwerkes 1, wobei der Aufnahme sichergestellt ist, daß über den Drehpunkt 10 eine Lagerung des Schneidwerkes 1 erreicht wird. Nach Aufnahme des Schneidwerkes 1 erfolgt dann die Fixierung des Schneidwerkes 1 durch die Fangtaschen 6 und die Fangtaschen 7 (beispielsweise durch eine manuelle oder automatische Betätigung derselben). Zu diesem Zweck sind die Fangtaschen 6 und/oder die Fangzapfen 7 derart ausgebildet, daß sie die Bewegung des Pendelausgleiches nachvollziehen.

Figur 2 zeigt einen Querschnitt durch ein Schneidwerk. In dieser Figur ist die Realisierung der Vorrichtung zum Ausgleich von Unebenheiten des Bodens (Pendelvorrichtung) gezeigt. Die Pendelvorrichtung ist an dem Einzugskanal 4 auf einer Achse unterhalb des Einzugkanales 4 angelenkt. Damit ist das Schneidwerk 1 um einen Drehpunkt 10, wobei das Schneidwerk 1 in vorteilhafter Weise ausgeglichen aufgehangen ist. Im Falle einer unterschiedlichen Massenverteilung zu den beiden Seiten des Drehpunktes 10 ist es denkbar, eine Seite des Schneidwerkes 1 derart mit einer Kraft zu beaufschlagen, daß eine ausgeglichene Aufhängung gewährleistet ist. Diese Kraftbeaufschlagung kann beispielsweise mittels einer Hydraulik- oder Federkraft realisiert werden. Dies ist beispielsweise dann der Fall, wenn wesentliche Komponente des Schneidwerkantriebes auf einer Seite des Schneidwerkes 1 angeordnet sind. Zur Fuhrung und Begrenzung der Pendelvorrichtung sind an dem Schneidwerk 1 die Anschläge 8 und an dem Einzugskanal 4 die Anschläge 9 vorgesehen. Diese sind beispielsweise derart gestaltet, daß die Anschläge 9 an dem Einzugskanal 4 eine Führung für die Anschläge 8 des Schneidwerkes 1 darstellen. Diese Anschläge 8 können derart gestaltet sein, daß sie fest oder veränderlich sind. Darüber hinaus ist eine Gestaltung der Anschläge 8 und 9 derart denkbar, daß eine Neigung des Schneidwerkes 1 gegenüber einer Bezugsachse möglich ist. Der Drehpunkt 10 ist beispielsweise derart realsisiert, daß an dem Schneidtisch 2 des Schneidwerkes 1 ein Zapfen vorgesehen ist, der in eine entsprechend ausgebildete Vertiefung, die am Frontbereich des Einzugskanales 4 vorgesehen ist, eingreift.

## Patentansprüche

1. Erntemaschine, insbesondere Mähdrescher, mit einem an der Erntemaschine über eine Kupplungseinrichtung anbaubaren Schneidwerk, dem eine Vorrichtung zum Ausgleich von Unebenheiten des Bodens (Pendelausgleich) zugeordnet ist,
*dadurch gekennzeichnet*, daß eine Trennstelle der Kupplungseinrichtung (5) und die Vorrichtung zum Ausgleich von Unebenheiten in einer Ebene angeordnet sind.

2. Erntemaschine nach Anspruch 1,
*dadurch gekennzeichnet,* daß die Trennstelle der Kupplungseinrichtung (5) und die Vorrichtung zum Ausgleich von Unebenheiten in einer im wesentlichen zur Längsachse der Erntemaschine senkrechten Ebene angeordnet sind.

3. Erntemaschine nach Anspruch 1 oder 2,
*dadurch gekennzeichnet*, daß die Vorrichtung einen Drehpunkt (10) aufweist, wobei das Schneidwerk (1) um den Drehpunkt (10) herum pendelnd gelagert ist gegenüber einem Einzugskanal (4) der Erntemaschine.

4. Erntemaschine nach einem der vorhergehenden Ansprüche,
*dadurch gekennzeichnet*, daß an dem Schneidwerk (1) und an dem Einzugskanal (4) Anschläge (8, 9) derart vorgesehen sind, daß eine Führung bzw. Begrenzung des Pendelausgleiches gegeben ist.

5. Erntemaschine nach einem der vorhergehenden Ansprüche,
*dadurch gekennzeichnet*, daß die Position der Anschläge (8, 9), insbesondere die Position der Anschläge (9), veränderbar ist.

6. Erntemaschine nach einem der vorhergehenden Ansprüche,
*dadurch gekennzeichnet*, daß in der Kupplungseinrichtung (5) Mittel integriert sind, die für einen Schneidwerkantrieb, eine Hydraulik bzw. eine Elektrik erforderlich sind.

7. Erntemaschine nach einem der vorhergehenden Ansprüche,
*dadurch gekennzeichnet*, daß der Drehpunkt (10) fiktiv ist.

8. Erntemaschine nach einem der vorhergehenden Ansprüche,
*dadurch gekennzeichnet*, daß die Anschläge (9) im wesentlichen U-förmig und derart ausgebildet sind, daß diese nach Ankuppeln (Einhängen mittels hydraulischer Bewegung des Einzugskanales (4)) des Schneidwerkes (1) über den Anschlägen (8) gleitend geführt sind.
